# EUROPEAN PATENT APPLICATION

(11) **EP 0 635 821 A1**
(43) Date of publication of application: **25.01.1995**
(21) Application number: 93111723.8
(22) Date of filing: 22.07.1993
(51) Int. Cl.: G11B 5/31

(54) **A process for the fabrication of thin film magnetic heads**

(71) Applicant: International Business Machines Corporation, Armonk, N.Y. 10504 (US)
(72) Inventor: Thiele, Martin, Dipl.-Ing., D-55288 Spiesheim (DE)
(74) Representative: Schäfer, Wolfgang, Dipl.-Ing.

(57) **Abstract**

A process for the fabrication of thin film magnetic heads is provided that allows better stud adhesion and eliminates the problem of corrosive elements building up along the pole tip.

The process further allows to build up a stud that is mechanically more stable against bonding pressure and less thermal stress is created during the overcoat process.

## Description

The present invention is concerned with a process for the fabrication of thin film magnetic heads, and especially with a new stud design for such heads.

The current process for thin film magnetic heads can roughly be separated into four different sections:
1. The construction of the first magnetic pole (P1),
2. The conductor coil,
3. The construction of the second magnetic pole (P2) and
4. The construction of the electrical conductors (studs).

In thin film head production relatively large conductors are used to make electrical contact between the modules and the magnetic heads.

Their construction serve totally different tasks, e.g.:
(i) mechanical stability,
(ii) chemical stability and
(iii) low contact resistivity.

In the past, different types of studs in terms of shape, process and metal combination have been used. So after the completion of the pole tip P2, a thick copper stud of about 30 - 50 µm was plated. This thickness was due to the sputtering of a thick aluminum oxide layer (overcoat) to compensate differences in topography. The surface was planarized by lapping the pads with a metal plate. Different kinds of problems occurred during the production. First, due to the metal combination used (Cu plate/NiFe sputter/NiFe plate/Cu sputter /Cu plate/NiFe sputter/Au plate) six interfaces were created which could get contaminated during the process, thus leading to stud adhesion failure.

Second, the alumina overcoat was chemically etched due to the used photoresist (RISTON®) which creates capillaries along the thin film head. The gold plating solution, in turn, etched holes into the overcoat. These voids appeared along the poletip structure at the air bearing surface. Third, by using the same structure of full Gold studs the next generation of Gold plating solution contained Thallium as a grain refiner. This, however, resulted in segragation of Thallium at the NiFe/Au interface leading to stud adhesion failure (stud pullouts).

Furthermore, if the second photolithography mask to plate Au was smaller than the plated Cu stud, corrosion may occur if cupper is exposed.

As already mentioned above, after the second pole tip was formed, a copper seed layer was deposited for copper stud plating. If the copper seed was sputter etched away, redeposition of Cu along the pole tip occured, which formed a corrosive element during slider lapping.

In addition, the deposition of the alumina overcoat is a long-time process of up to about 16 hours. The wafers were thermally stressed due to the used sputter conditions and sputter time. Temperatures up to 120°C are possible.

The thermal stress applied during OC deposition may result in a degradation of the overall magnetic behaviour seen especially in the production of MR heads. After the overcoat deposition a planarization process (lapping) is necessary to open up the copper studs again.

It is, therefore, an object of the present invention to overcome the above deficiencies.

It is another object of the invention to provide a low cost process for fabricating thin film magnetic heads, showing more simplicity and no degradation of the existing quality.

These and other objects are achieved by a process for fabricating thin film magnetic heads, comprising the following steps:
a. constructing a first and a second magnetic pole tip (P2),
b. covering said first and said second magnetic pole tip and a P2 flag made of a metal film or an alloy film and plated simultaneously during the completion of P2 with a thin layer of aluminum oxide,
c. applying a fist photoresist as a first mask,
d. exposing and developing said first mask to etch a predetermined pattern into said thin layer of aluminum oxide,
e. applying a NiFe seed layer onto the cleaned surface,
f. applying a second photoresist as a second mask, exposing and developing said second mask,
g. providing a thin gold layer into the openings of said second mask,
h. removing said second photoresist and etching away said NiFe seed layer.

Further advantageous embodiments are contained in the subclaims.

The present invention allows better stud adhesion due to reduction of interfaces concerning the metal combination. A further advantage of the present invention is that no copper redeposition is possible along the pole tip and that no capillaries are to occur during the process, so that no corrosive element can be built up.

There is no need to planarize the surface anymore, since a predetermined pattern is etched into a thin overcoat, which will be completely filled up with gold lateron. Therefore a perfectly cleaned stud surface is achieved with this process.

In addition to that, the new stud is mechanically more stable against bonding pressure. Also, the deposition time of the overcoat is drastically decreased.

Another advantage of the present invention lies in the fact that less thermal stress is created during the overcoat process.

The invention will be desribed in more detail hereinafter with respect to the accompanying drawings in which
- Fig. 1: is a schematical process sequence of the process according to the present invention and
- Fig. 2: is a schematical top down view of a stud after completion according to the invention.

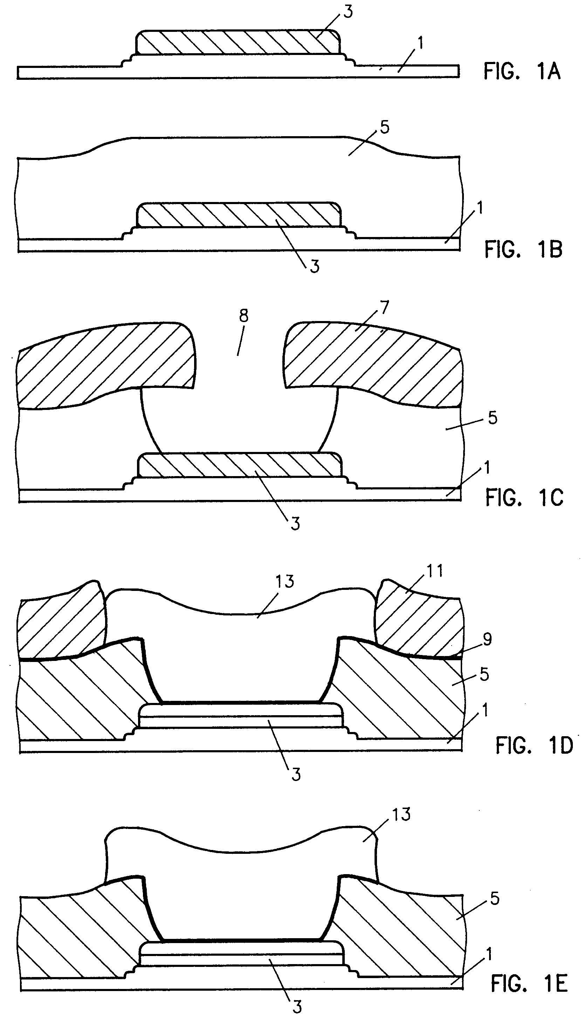

Referring now to Fig. 1, a schematical process sequence will be described.

During the completion of the second pole tip P2 ((1), Fig. 1A), a P2 flag (3), i.e., the lead-out to the external contact, is plated simultaneously in case of NiFe, or separately if other metals, like Cu, are required. Then this flag and the heads are covered with a thin layer of aluminum oxide, called overcoat ((OC), (5), Fig. 1B). The layer has a thickness of about 5 to 20 µm, preferably 15 µm. Due to this thin layer, the deposition time is decreased from about 16 hours to about 4 hours.

Subsequently, a first positive photoresist ((7), Fig. 1C) such as, e.g., AZ 1375® or AZ 1529®, is applied for the following photolithographic step to expose and develop a first mask to pattern the OC with etching. The thickness of the applied resist is between 4 µm and 7µm, preferably 5µm.

Next, openings (8) are etched into the OC layer. Preferably, a mixture of NaOH and EDTA is used as the etchant. A suitable mixture is e.g. 11 g/L NaOH + 50 g/L Na₂EDTA · 2H₂O. The etch rate depends on the pH and the temperature. This solution works very stable and safe at a pH of 11 and a temperature of about 50-57°C. It does not attack the P2 flag made of a metal film or an alloy film. Using these conditions, the etch rate is about 130 nm/min but can be easily increased to 200 nm/min. This also assures a good adhesion between the P2 flag and the following gold layer, since the external contact metal is not corroded.

After exposing and developing the first photoresist and after OC etch, a NiFe seed layer ((9), Fig. 1D) is applied, preferably sputtered onto the cleaned surface of the opening to act as electrical contact layer for the next plating step. The thickness of the seed layer lies between 60 nm and 100 nm and is preferably about 80 nm.

Now, a second positive photoresist (11) is provided, exposed and developed by using a mask which is larger than the previously etched image, since the dimension of the finished stud is driven by macroscopic bonding techniques.

Subsequently, a thin gold layer ((13), Fig. 1D) is applied to the mask openings. The thickness of this gold layer lies in the range of 5µm to 15 µm, and is preferably 9 to 10 µm.

After stripping of the resist the NiFe seed layer (9) is etched away by using a vacuum dry etch process, preferably sputter etching (Fig. 1E).

After etching away the seed layer, the magnetic head is completed by known methods.

The new gold conductor stud process addresses the major issues mentioned above, i.e., mechanical stability, chemical stability and low contact resistivity.

The problem that due to the material combination (Cu, NiFe, Cu, Au) used in the past, stud adhesion failure could be observed is solved by the fact that the interface between P2 (1) and the gold layer (13) is improved by using no corrosive etch solutions (NaOH/EDTA) and purely NiFe seed layer (9).

With the new process according to the invention, only four interfaces are present, thus reducing the danger of contamination.

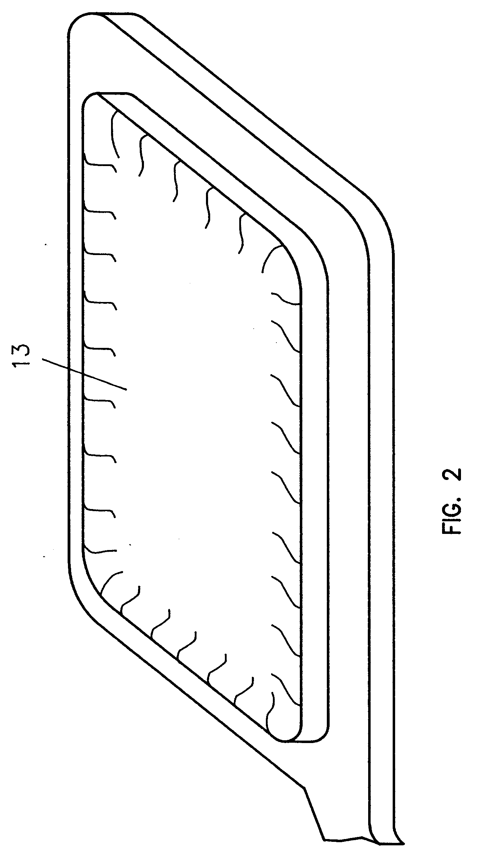

Since in former processes, thick copper studs were plated over the overcoat, these copper studs created the so called "mushrooming" in the overcoat around the structure in which the plated copper is not completely surrounded by Al₂O₃. With the new process according to the invention, the gold stud structure fits perfectly in the mask opening (press-button-effect, Fig. 2) and no mushrooming is observed.

In full gold processes known in the art, grain refiners used for the Au plating deposition, such as thallium or cobalt aggregated at the NiFe/Au interface caused adhesion failure. In the process now proposed, however, the grain refiner concentration is low, because only 5 to 15µm Au and only NiFe seed is used which has about the same element structure as Au for perfect adhesion.

Moreover, since no copper is used no copper redeposition may occur and no copper initiated corrosion is possible.

Since the NiFe seed layer is sputter etched away, a perfectly cleaned stud surface results, so that lapping of the surface is no longer necessary.

## Claims

1. A process for the fabrication of thin film magnetic heads, comprising the following steps:
a. constructing a first and a second magnetic pole tip (P2) (1),
b. covering said first and said second magnetic pole tip and a P2 flag (3) made of a metal film or an alloy film and plated during the construction of P2 with a thin layer of aluminum oxide (5),
c. applying a first photoresist (7) as a first mask,
d. exposing and developing said first mask to etch a predetermined pattern into said thin layer of aluminum oxide,
e. applying a NiFe seed layer (9) onto the cleaned surface,
f. providing a second photoresist (11) as a second mask, exposing and developing said second mask,
g. applying a thin gold layer (13) to the openings of said second mask,
h. removing said second photoresist and etching away said NiFe seed layer.

2. A process according to claim 1, wherein the thickness of said thin aluminum oxide layer is between 5 µm and 20 µm, preferably 15 µm.

3. A process according to claim 1, wherein said first photoresist comprises a positive photoresist.

4. A process according to claim 1, wherein an etchant consisting of NaOH and EDTA is used to etch said predetermined pattern in step d).

5. A process according to claim 1, wherein said NiFe seed layer has a thickness of 60 to 100 nm, preferably 80 nm.

6. A process according to claim 1, wherein said second photoresist comprises a positive photoresist.

7. A process according to claim 1, wherein said second mask is larger than said first mask.

8. A process according to claim 1, wherein in step h) said NiFe seed layer is etched way by sputter etching.
